(19) Europäisches Patentamt
European Patent Office
Office européen des brevets

(11) EP 1 322 705 B1

(12) EUROPÄISCHE PATENTSCHRIFT

(45) Veröffentlichungstag und Bekanntmachung des Hinweises auf die Patenterteilung:
**06.05.2009 Patentblatt 2009/19**

(21) Anmeldenummer: **01972036.6**

(22) Anmeldetag: **10.09.2001**

(51) Int Cl.:
***C08L 25/04*** *(2006.01)* ***C08L 51/04*** *(2006.01)*
***C08K 5/00*** *(2006.01)*

(86) Internationale Anmeldenummer:
**PCT/EP2001/010429**

(87) Internationale Veröffentlichungsnummer:
**WO 2002/024804 (28.03.2002 Gazette 2002/12)**

(54) **ADDITIVMISCHUNGEN FÜR DIE VERWENDUNG IN VINYLAROMATISCHEN HARZMISCHUNGEN**
THERMOPLASTIC MOULDING MATERIALS WITH SPECIAL ADDITIVE MIXTURES
MELANGES D'ADDITIFS UTILISES DANS DES MELANGES DE RESINES VINYLAROMATIQUES

(84) Benannte Vertragsstaaten:
**AT BE CH CY DE DK ES FI FR GB GR IE IT LI LU MC NL PT SE TR**

(30) Priorität: **21.09.2000 DE 10046774**

(43) Veröffentlichungstag der Anmeldung:
**02.07.2003 Patentblatt 2003/27**

(73) Patentinhaber: **Ineos ABS (Jersey) Limited**
**Whiteley Chambers**
**Don Street**
**St Helier**
**Jersey JE4 9WG**
**Channel Islands (GB)**

(72) Erfinder: **EICHENAUER, Herbert**
**41539 Dormagen (DE)**

(74) Vertreter: **Neidlein, Helga et al**
**Gille Hrabal Struck Neidlein Prop Roos**
**Postfach 18 04 09**
**40571 Düsseldorf (DE)**

(56) Entgegenhaltungen:
**EP-A- 0 331 975**
**EP-A- 0 487 124**
**EP-A- 0 869 147**
**FR-A- 2 129 717**
**GB-A- 1 546 651**
**JP-A- 53 077 238**
**US-A- 4 957 968**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 322 705 B1

**Beschreibung**

Gegenstand der vorliegenden Erfindungen sind Zusammensetzungen enthaltend Matrix-Polymer, Pfropfpolymer und spezielle Additivmischungen, deren Verwendung zur Herstellung von Formkörper sowie die daraus erhältlichen Formkörper. Gegenstand der Erfindung ist ferner auch die Additivkombination.

ABS-Formmassen werden schon seit vielen Jahren in großen Mengen als thermoplastische Harze für die Herstellung von Formteilen aller Art eingesetzt. Dabei reicht das Eigenschaftsspektrum dieser Harze von relativ spröde bis hochzäh.

Ein spezielles Einsatzgebiet für ABS-Formmassen ist die Herstellung von Formteilen durch Spritzgießen (z.B. Gehäuse, Spielzeug, Kfz.-Teile), wobei es insbesondere auf eine sehr gute Fließfähigkeit des Polymermaterials ankommt. Außerdem müssen die so hergestellten Formteile in der Regel eine gute Kerbschlagzähigkeit sowie eine gute Beständigkeit bei thermischer Belastung aufweisen.

Es besteht die Aufgabe, bei gegebenem Kautschukgehalt, gegebener Kautschukteilchengröße und gegebenem Matrixharzmolekulargewicht möglichst hohe Zähigkeitswerte unter Beibehaltung der guten thermoplastischen Fließfähigkeit zu erzielen. Dabei sollten die hohen Zähigkeitswerte möglichst unabhängig vom Typ des eingesetzten Matrixharzes, insbesondere aber bei Verwendung der für ABS typischen Styrol/Acrylnitril-Copolymerisate und α-Methylstyrol/Acrylnitril-Copolymerisate, erhalten werden.

Eine Möglichkeit, die Zähigkeit von ABS-Polymerisaten bei gegebenem Kautschukgehalt, gegebener Kautschukteilchengröße und gegebenem Matrixmolekulargewicht zu erhöhen, ist der Zusatz spezieller Silikonölverbindungen (vgl. EP-A 6521); allerdings können hierbei Nachteile wie schlechte Lackierbarkeit, ungenügende Bedruckbarkeit oder verschlechterte Streckspannungswerte (Gefahr von Weißbruch) auftreten. Auch wurde der Zusatz geringer Mengen EPDM-Kautschuk (vgl. EP-A 412 370) oder AES-Polymerisat (vgl. EP-A 412 371) beschrieben. Beide Methoden benötigten jedoch relativ teure Additivkomponenten in beträchtlichen Einsatzmengen.

Die Verwendung hoher Einsatzmengen einzelner niedermolekularer Additivkomponenten kann in speziellen Fällen eine Verbesserung der Verarbeitbarkeit bewirken, hiermit geht jedoch üblicherweise eine negative Beeinflussung sonstiger Eigenschaften wie z.B. Zähigkeit, Modul und Wärmeformbeständigkeit einher.

WO 00/77092 offenbart thermoplastische Formmassen, die sich von den Erfindungsgemäßen dadurch unterscheiden, dass Komponente (II) keine Struktureinheit

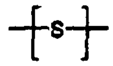

enthält.

US-A-4,957,968 offenbart eine Stabilisator-Kombination für thermoplastische Elastomere, die Calciumstearat, einen Alkylester der Thlodiproplonsäure und Bis (di-tert-butyl-hydrocynnamoyl)hydrazid (Irganox ® MD-1024) enthält. Die Zusammensetzung enthält zudem Paraffinöl.

Es wurde nun gefunden, dass durch Einsatz spezieller Additivmischungen ABS-Produkte mit einer sehr guten Kombination aus Kerbschlagzähigkeit (sowohl bei Raumtemperatur als auch bei tiefer Temperatur) und ausgezeichneter thermoplastischer Verarbeitbarkeit erhalten werden.

Gegenstand der Erfindung sind thermoplastische Formmassen bzw. Zusammensetzungen enthaltend

A) 5 bis 95 Gew.-%, bevorzugt 10 bis 90 Gew.-% und besonders bevorzugt 20 bis 75 Gew.-% eines oder mehrerer thermoplastischer Homo-, Co- oder Terpolymerisate von Styrol, α-Methylstyrol, kernsubstituiertem Styrol, Methylmethacrylat, Acrylnitril, Methacrylnitril, Maleinsäureanhydrid, N-substituiertem Maleinimid oder Mischungen daraus

B) 5 bis 95 Gew.-%, bevorzugt 10 bis 90 Gew.-% und besonders bevorzugt 25 bis 80 Gew.-% eines oder mehrerer Pfropfpolymerisate von

B.1) 5 bis 90 Gew.-Teilen, vorzugsweise 20 bis 80 Gew.-Teilen und besonders bevorzugt 25 bis 60 Gew.-Teilen Styrol, α-Methylstyrol, kernsubstituiertem Styrol, Methylmethacrylat, Acrylnitril, Methacrylnitril, Maleinsäureanhydrid, N-substituiertem Maleinimid oder Mischungen daraus auf

B.2) 95 bis 10 Gew.-Teile, vorzugsweise 80 bis 20 Gew.-Teile und besonders bevorzugt 75 bis 40 Gew.-Teile mindestens eines Kautschuks mit einer Glastemperatur ≤10°C

und

C) 0,05 bis 10 Gew.-Teile, vorzugsweise 0,1 bis 8 Gew.-Teile und besonders bevorzugt 0,5 bis 5 Gew.-Teile jeweils

pro 100 Gew.-Teile A) + B) einer Kombination bestehend aus einer Komponente (II) und mindestens 2 Komponenten, ausgewählt aus Verbindungen I), III) und IV), wobei I) eine Verbindung mit mindestens einer Struktureinheit

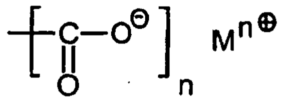

mit

M = Metall, vorzugsweise Mg, Ca, Zn
n = Wertigkeit des Metalls M, vorzugsweise 1 oder 2
darstellt,

II) eine Verbindung mit mindestens einer Struktureinheit

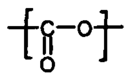

und mindestens einer Struktureinheit

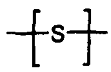

darstellt,

III) eine Verbindung mit mindestens einer Struktureinheit

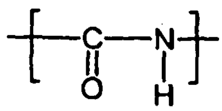

darstellt ausgewählt aus Ethylendiaminbisstearylamid, Erucasäureamid, Ölsäureamid, Stearinsäureamid, Behensäureamid und Montansäureamid und

IV) eine Verbindung mit Struktureinheite darstellt, die verschieden von in den Verbindungen (I) bis (III) enthaltenen angegebenen Struktureinheiten bzw. Kombination von Struktureinheiten sind, d.h. die Verbindung (IV) enthält keine Struktureinheit der in den Verbindungen (I) bis (III) enthaltenen Struktureinheiten bzw. Kombination von Struktureinheiten.

Vorzugsweise enthält jede der Verbindungen I) bis IV) mindestens einen endständigen aliphatischen $C_6$-$C_{32}$-Kohlenwasserstoff-Rest.

Erfindungsgemäß geeignete thermoplastische Polymerisate A) sind solche von Styrol, α-Methylstyrol, p-Methylstyrol, Vinyltoluol, Halogenstyrol, Methylacrylat, Methylmethacrylat, Acrylnitril, Maleinsäureanhydrid, N-substituiertem Maleinimid oder Mischungen daraus.

Die Polymerisate A) sind harzartig, thermoplastisch und kautschukfrei. Besonders bevorzugte Polymerisate A) sind solche aus Styrol, Methylmethacrylat, Styrol/Acrylnitril-Gemischen, Styrol/Acrylnitril/Methylmethacrylat-Gemischen, Styrol/Methylmethacrylat-Gemischen, Acrylnitril/Methylmethacrylat-Gemischen, α-Methylstyrol/Acrylnitril-Gemischen, Styrol/α-Methylstyrol/Acrylnitril-Gemischen, α-Methylstyrol/Methylmethacrylat/Acrylnitril-Gemischen, Styrol/α-Methylstyrol/Methmethacrylat-Gemischen, Styrol/α-Methylstyrol/Methmethacrylat/Acrylnitril-Gemischen, Styrol/Maleinsäureanhydrid-Gemischen, Methylmethacrylat/Maleinsäureanhydrid-Gemischen, Styrol/Methylmethacrylat/Maleinsäureanhydrid-Gemischen, Styrol/- Acrylnitril/N-Phenylmaleinimid-Gemischen.

Die Polymerisate A) sind bekannt und lassen sich durch radikalische Polymerisation, insbesondere durch Emulsions-, Suspensions-, Lösungs- oder Massepolymerisation herstellen. Sie besitzen vorzugsweise Molekulargewichte $M_w$, von 20 000 bis 200 000 bzw. Grenzviskositäten [η] von 20 bis 110 ml/g /gemessen in Dimethylformamid bei 25°C).

Zur Herstellung der Pfropfpolymerisate B) geeignete Kautschuke sind insbesondere Polybutadien, Butadien/Styrol-Copolymerisate, Butadien/Acrylnitril-Copolymerisate, Polyisopren oder Alkylacrylatkautschuke auf der Basis von $C_1$-$C_8$-Alkylacrylaten, insbesondere Ethyl-, Butyl-, Ethylhexylacrylat.

Die Acrylatkautschuke können gegebenenfalls bis zu 30 Gew.-% (bezogen auf Kautschukgewicht) Monomere wie Vinylacetat, Acrylnitril, Styrol, Methylmethacrylat und/oder Vinylether copolymersiert enthalten. Die Acrylatkautschuke können auch kleine Mengen, vorzugsweise bis zu 5 Gew.-% (bezogen auf Kautschukgewicht) vernetzend wirkender, ethylenisch ungesättigter Monomerer einpolymerisiert enthalten. Vernetzer sind z.B. Alkylendioldiacrylate und -methacrylate, Polyester-diacrylate und -methacrylate, Divinylbenzol, Trivinylbenzol, Triallylcyanurat, Allylacrylat und -methacrylat, Butadien und Isopren, Pfropfgrundlage können auch Acrylatkautschuke mit Kern/Schalen-Struktur sein mit einem Kern aus vernetztem Dienkautschuk aus einem oder mehreren konjugierten Dienen, wie Polybutadien, oder einem Copolymerisat eines konjugierten Diens mit einem ethylenisch ungesättigten Monomer wie Styrol und/oder Acrylnitril.

Weitere geeignete Kautschuke sind z.B. die sogenannten EPDM-Kautschuke (Polymerisate aus Ethylen, Propylen und einen nicht-konjugierten Dien wie z.B. Dicyclopentadien), EPM-Kautschuke (Ethylen/Propylen-Kautschuke) und Silikonkautschuke, die gegebenenfalls eine Kern/Schalen-Struktur aufweisen können.

Bevorzugte Kautschuke zur Herstellung der Pfropfpolymerisate B) sind Dien- und Alkylacrylatkautschuke sowie EPDM-Kautschuke.

Die Kautschuke liegen im Pfropfpolymerisat B) in Form wenigstens partiell vernetzter Teilchen eines mittleren Teilchendurchmessers ($d_{50}$) von 0,05 bis 20 μm, bevorzugt von 0,1 bis 2 μm und besonders bevorzugt von 0,1 bis 0,8 μm, vor. Der mittlere Teilchendurchmesser $d_{50}$ wird vermittelt durch Ultrazentrifugenmessungen nach W. Scholtan et al., Kolloid-Z. u.Z. Polymere 250 (1972), 782-796 oder durch Auswertung elektronenmikroskopischer Aufnahmen.

Die Polymerisate B) können durch radikalische Pfropfpolymerisation der Monomeren B.1) in Gegenwart der zu bepfropfenden Kautschuke B.2) hergestellt werden.

Bevorzugte Herstellungsverfahren für die Pfropfpolymerisate B) sind Emulsions-, Lösungs-, Masse- oder Suspensionspolymerisation und an sich bekannte Kombinationen aus diesen Verfahren. Besonders bevorzugte Pfropfpolymerisate B) sind die ABS-Polymerisate.

Ganz besonders bevorzugte Polymerisate B) sind Produkte, die durch radikalische Polymerisation von Mischungen aus Styrol und Acrylnitril, vorzugsweise im Gewichtsverhältnis 10:1 bis 1:1, besonders bevorzugt im Gewichtsverhältnis 5:1 bis 2:1, in Gegenwart mindestens eines aus überwiegend Dienmonomeren (vorzugsweise Polybutadien, das bis zu 30 Gew.-% Styrol und/oder Acrylnitril als Comonomere eingebaut enthalten kann) aufgebauten Kautschuks mit einem mittleren Teilchendurchmesser ($d_{50}$) von 100 bis 450 nm, ganz besonders bevorzugt in Gegenwart zweier aus überwiegend Dienmonomeren (vorzugsweise Polybutadien, das bis zu 30 Gew.-% Styrol und/oder Acrylnitril als Comonomere eingebaut enthalten kann) aufgebauter Kautschuke mit a) einem mittleren Teilchendurchmesser ($d_{50}$) von 150 bis 300 nm und b) einem mittleren Teilchendurchmesser ($d_{50}$) von 350 bis 450 nm im Gewichtsverhältnis (a): (b) = 10:90 bis 90:10, vorzugsweise 30:70 bis 60:40, erhalten wurden.

Der Kautschukgehalt der Polymerisate B) beträgt vorzugsweise 40 bis 95 Gew.-%, besonders bevorzugt 50 bis 90 Gew.-% und ganz besonders bevorzugt 55 bis 85 Gew.-%.

Als Einzelkomponenten I) und II) der Additivmischung C) sind beispielsweise und bevorzugt geeignet:

Als Komponente I): Magnesiumstearat, Calciumstearat, Zinkstearat, Magnesiummontanat, Calciummontanat, Zinkmontanat, Magnesiumbehenat, Calciumbehenat, Zinkbehenat, Magnesiumoleat, Calciumoleat, Zinkoleat; bevorzugt sind Magnesiumstearat und/oder Calciumstearat, besonders bevorzugt ist Magnesiumstearat.

Als Komponente II): Ester der β-Thio-dipropionsäure wie z.B. und bevorzugt Lauryl-, Stearyl-, Myristyl- oder Tridecylester der β-Thio-dipropionsäure, Pentaerythrittetrakis-(β-dodecylmercapto)-propionat, Verbindungen der Formel (V)

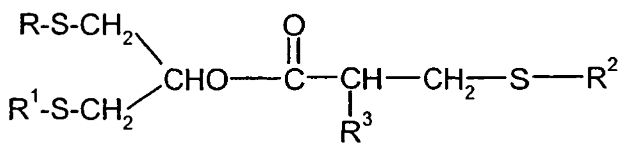

(V)

in welcher

| | |
|---|---|
| R, $R^1$ und $R^2$ | unabhängig voneinander $C_1$-$C_{20}$-Alkyl, Phenylreste, die durch 1 oder 2 $C_1$-$C_8$-Alkylgruppen substituiert sein können, $C_7$-$C_{12}$-Aralkylreste oder $C_5$- $C_{12}$-Cycloalkylreste bedeuten, |
| $R^3$ | H oder $C_1$-$C_4$-Alkyl bedeutet. |

Die Verbindungen der Formel (V) lassen sich gemäß den Angaben in EP-A 64 020 herstellen.

Bevorzugt sind Ester der β-Thio-dipropionsäure, besonderes bevorzugt sind Laurylester oder Stearylester der β-Thio-dipropionsäure oder Mischungen hieraus.

Komponente III) wird ausgewählt aus. Ethylendiaminbisstearylamid, Erucasäureamid, Ölsäureamid, Stearinsäureamid, Behensäureamid, Montansäureamid, bevorzugt sind Ethylendiaminbisstearylamid und/oder Erucasäureamid, besonders bevorzugt ist Ethylendiaminbisstearylamid.

Als Komponente IV) wird ausgewählt aus: Paraffinöle, Kohlenwasserstoffwachse, niedennolekulares Polystyrol hergestellt unter Verwendung von $C_8$-$C_{18}$-Alkylmercaptanen als Molekulargewichtsregler mit mittleren Molekulargewichten ($\overline{M}_w$) zwischen 2 000 und 15 000, vorzugsweise zwischen 2 500 und 12 000 und besonders bevorzugt zwischen 3 000 und 10 000, niedermolekulares Styrol/Acrylnitril-Copolymerisat hergestellt unter Verwendung von $C_8$-$C_{18}$-Alkylmercaptanen als Molekulargewichtsregler mit mittleren Molekulargewichten ($\overline{M}_w$) zwischen 2 000 und 15 000, vorzugsweise zwischen 2 500 und 12 000 und besonders bevorzugt zwischen 3 000 und 10 000, niedermolekulares α-Methylstyrol/Acrylnitril-Copolymerisat hergestellt unter Verwendung von $C_8$-$C_{18}$-Alkylmercaptanen als Molekulargewichtsregler mit mittleren Molekulargewichten ($\overline{M}_w$) zwischen 2 000 und 15 000, vorzugsweise zwischen 2 500 und 12 000 und besonders bevorzugt zwischen 3 000 und 10 000, niedermolekulares Polymethylmethacrylat hergestellt unter Verwendung von $C_8$-$C_{18}$-Alkylmer-captanen als Molekulargewichtsregler mit mittleren Molekulargewichten ($\overline{M}_w$) zwischen 2 000 und 15000, vorzugsweise zwischen 2 500 und 12 000 und besonders bevorzugt zwischen 3 000 und 10 000, $C_6$-$C_{32}$-Alkanole, z.B. Stearylalkohol, $C_6$-$C_{32}$-Alkenole, z.B. Oleylalkohol.

Bevorzugt sind Paraffinöle, niedermolekulare Styrol/Acrylnitril-Copolymerisate und α-Methylstyrol/Acrylnitril-Copolymerisate, besonders bevorzugt sind Paraffinöle und/oder niedermolekulare Styrol/Acrylnitril-Copolymerisate.

Vorzugsweise besitzen alle Komponenten I), II), III), und IV) ein Molekulargewicht über 300, vorzugsweise über 400 und besonders bevorzugt über 500.

Die Mengenverhältnisse beim erfindungsgemäßen Einsatz von Komponente (II) mit mindestens 2 Komponenten, ausgewählt aus den Komponenten I), III) und IV) können in weiten Bereichen variiert werden. Vorzugsweise werden sie so gewählt, dass die Beziehung

| | |
|---|---|
| | (I) ≤ (IV) ≤ (II) ≤ (III) |
| besonders bevorzugt | (1) ≤ (IV) ≤ (II) < (III) und |
| ganz besonders bevorzugt | (I) < (IV) ≤ (II) < (III) |
| oder die Beziehung | (I) ≤ (IV) ≤ (III) ≤ (II) |
| besonders bevorzugt | (I) ≤ (IV) < (III) ≤ (II) und |
| ganz besonders bevorzugt | (I) < (IV) < (III) ≤ (II) |

gilt.

Besonders bevorzugte Mischungen enthalten 15 bis 65 Gew.-% Pfropfpolymerisat von 25 bis 60 Gew.-Teilen Styrol, α-Methylstyrol, Acrylnitril, N-Phenylmaleinimid oder Mischungen daraus auf 75 bis 40 Gew-Teile Polybutadien, 85 bis 35 Gew.-% thermoplastischem Copolymerisat aus 5 bis 40 Gew.-Teilen Acrylnitril und 95 bis 60 Gew.-Teilen Styrol, α-Methylstyrol, N-Phenylmaleinimid oder Mischungen daraus und
0,5 bis 5 Gew.-Teilen pro 100 Gew.-Teilen A+B einer Kombination von Komponente (II) und mindestens 2 Komponenten ausgewählt aus

I) Magnesiumstearat,
II) β,β'-Thiodipropionsäuredilaurylester oder β,β'-Thiodipropionsäuredistearylester,
III) Ethylendiaminbisstearylamid
IV) Paraffinöl oder niedermolekulares Styrol/Acrylnitril-Copolymer.

Die erfindungsgemäßen Mischungen, enthaltend A), B) und C) und gegebenenfalls übliche Zusatzstoffe wie

Verarbeitungsmittel, Stabilisatoren, Pigmente, Antistatika, Füllstoffe werden hergestellt, indem man die jeweiligen Bestandteile in bekannter Weise simultan oder sukzessive bei Zimmertemperatur oder bei höherer Temperatur vermischt und danach bei Temperaturen von 150°C bis 300°C in gebräuchlichen Aggregaten wie Innenknetern, Extrudern oder Doppelwellenschnecken schmelzcompoundiert oder schmelzextrudiert.

Die Formmassen der vorliegenden Erfindung können zur Herstellung von Formkörpem jeder Art verwendet werden, wobei übliche Herstellungsweisen benutzt werden können, insbesondere können Formkörpern durch Spritzguss hergestellt werden.

Eine weitere Form der Verarbeitung der erfindungsgemäßen Formmassen ist die Herstellung von Formkörpern durch Tiefziehen aus vorher nach bekannten Verfahren hergestellten Platten oder Folien.

Gegenstand der vorliegenden Erfindung ist daher ferner die Herstellung der erfindungsgemäßen Zusammensetzungen, sowie daraus hergestellte Formkörper. Gegenstand der Erfindung ist weiterhin die Additivkombination selbst.

## Beispiele

### Thermoplastharz A1

Statistisches Styrol/Acrylnitril (72:28) - Copolymerisat mit einem $M_w$ von ca. 115 000, ermittelt durch GPC (Gelpermeationschromatographie).

### Thermoplastharz A2

Statistisches $\alpha$-Methylstyrol/Acrylnitril (72:28) - Copolymerisat mit einem $M_w$ von ca. 75 000, ermittelt durch GPC.

### Pfropfpolymerisat B1

Pfropfprodukt erhalten durch Emulsionspolymerisation von 42 Gew.-% eines Styrol/Acrylnitril-Gemisches (Gewichtsverhältnis 73:27) auf 58 Gew.-% einer 1:1-Mischung (Gewichtsverhältnis) zweier teilchenförmiger Polybutadiene mit a) einem mittleren Teilchendurchmesser ($d_{50}$) von 290 nm und b) einem mittleren Teilchendurchmesser ($d_{50}$) von 420 nm. Aufarbeitung durch Koagulation des Latex mit Magnesiumsulfat, Waschen mit Wasser und anschließende Trocknung im Vakuum.

### Pfropfpolymerisat B2

Pfropfprodukt erhalten durch Emulsionspolymerisation von 50 Gew.-% eines Styrol/Acrylnitril-Gemisches (Gewichtsverhältnis 73:27) auf 50 Gew.-% teilchenförmiges Polybutadien mit einem mittleren Teilchendurchmesser ($d_{50}$) von 130 nm. Aufarbeitung wie unter B1.

Additiv CI1: Magnesiumstearat
(Fa. Bärlocher, München, Deutschland)

Additiv CI2 Calciumstearat
(Fa. Bärlocher, München, Deutschland)

Additiv CII1: $\beta,\beta'$-Thiodipropionsäuredilaurylester (Irganox PS800®, Ciba Speciality, Basel, Schweiz)

Additiv CII2: $\beta,\beta'$-Thiodipropionsäuredistearylester (Irganox PS802®, Ciba Speciality, Basel, Schweiz)

Additiv CIII1: Ethylendiaminbisstearylamid
(Henkel KG, Düsseldorf, Deutschland)

Additiv CIV 1: Niedermolekulares Styrol/Acrylnitril-Copolymerisat ($M_w \approx 4\,200$, ermittelt durch GPC) hergestellt durch radikalische Emulsionspolymerisation einer Mischung aus 63,9 Gew.-Teilen Styrol, 23,6 Gew.-Teilen Acrylnitril und 12,5 Gew.-Teilen tert.-Dodecylmercaptan.

Die Einzelkomponenten werden in den in Tabelle 1 angegebenen Gewichtsanteilen auf einem 1,3 1 Innenkneter bei Temperaturen von 160°C bis 200°C compoundiert, Die Formkörper werden auf einer Spritzgießmaschine bei 240°C hergestellt.

Die Kerbschlagzähigkeit wird bei Raumtemperatur ($a_k^{RT}$) und bei -30°C ($a_k^{-30°C}$) nach ISO 180/1A (Einheit: $kJ/m^2$) ermittelt, die Beurteilung der thermoplastischen Fließfähigkeit erfolgt durch Messung des Schmelzfließindex (MVR) gemäß DIN 53 735 U (Einheit: $cm^3/10$ min).

Wie ebenfalls aus Tabelle 1 ersichtlich ist, wird nur bei Einsatz der erfindungsgemäßen Mischungen eine sehr gute Kombination aus hoher Zähigkeit auch bei tiefer Temperatur und guter thermoplastischer Verarbeitbarkeit erreicht.

**Tabelle 1**: Zusammensetzungen und Prüfdaten der Formmassen

| Beispiel Nr. | A1 Gew.-Teile | A2 Gew.-Teile | B1 Gew.-Teile | B2 Gew.-Teile | CI1 Gew.-Teile | CI2 Gew.-Teile | CII1 Gew.-Teile | CII2 Gew.-Teile | CIII1 Gew.-Teile | CIV1 Gew.-Teile | $a_k^{RT}$ ($kJ/m^2$) | $a_k^{-30°C}$ ($kJ/m^2$) | MVR ($cm^3$/ 10 min) |
|---|---|---|---|---|---|---|---|---|---|---|---|---|---|
| 1 | 70 | - | 30 | - | - | - | 2 | - | 1 | 0,5 | 19,2 | 17,0 | 11,2 |
| 2 | 70 | - | 30 | - | - | - | - | 2 | 1 | 0,5 | 19,2 | 16,8 | 11,0 |
| 3 | 70 | - | 30 | - | 0,5 | - | 2 | - | - | 0,5 | 18,8 | 16,7 | 10,7 |
| 4 | 70 | - | 30 | - | - | - | 1 | - | 2 | 0,5 | 18,8 | 16,8 | 11,4 |
| 5 (Vergl.) | 70 | - | 30 | - | - | - | 2 | - | - | 0,5 | 14,8 | 8,3 | 9,2 |
| 6 (Vergl.) | 70 | - | 30 | - | - | - | - | 2 | - | - | 14,9 | 8,5 | 8,5 |
| 7 | - | 75 | 12,5 | 12,5 | 0,5 | - | 2 | - | 1 | 0,5 | 16,8 | 8,8 | 7,0 |
| 8 | - | 75 | 12,5 | 12,5 | - | 0,5 | 2 | - | 1 | 0,5 | 16,9 | 8,4 | 6,2 |
| 9 | - | 75 | 12,5 | 12,5 | - | - | - | 2 | 1 | 0,5 | 17,9 | 10,2 | 5,3 |
| 10 | - | 75 | 12,5 | 12,5 | 0,5 | - | - | 2 | 1 | 0,5 | 18,0 | 9,4 | 5,7 |
| 11 (Vergl.) | - | 75 | 12,5 | 12,5 | - | - | 2 | - | - | 0,5 | 10,2 | 7,8 | 5,6 |
| 12 (Vergl.) | - | 75 | 12,5 | 12,5 | - | - | 2 | - | - | - | 10,6 | 8,5 | 5,0 |
| 13 (Vergl.) | - | 75 | 12,5 | 12,5 | - | - | - | - | - | - | 10,3 | 6,8 | 4,9 |
| 14 (Vergl.) | - | 75 | 12,5 | 12,5 | - | - | - | - | - | 0,5 | 6,7 | n.b. | 4,9 |

(fortgesetzt)

| Beispiel Nr. | A1 Gew.-Teile | A2 Gew.-Teile | B1 Gew.-Teile | B2 Gew.-Teile | CI1 Gew.-Teile | CI2 Gew.-Teile | CII1 Gew.-Teile | CII2 Gew.-Teile | CIII1 Gew.-Teile | CIV1 Gew.-Teile | $a_k^{RT}$ (kJ/m$^2$) | $a_k^{-30°C}$ (kJ/m$^2$) | MVR (cm$^3$/ 10 min) |
|---|---|---|---|---|---|---|---|---|---|---|---|---|---|
| 15 (Vergl.) | - | 75 | 12,5 | 12,5 | - | - | - | - | 1 | 0,5 | 12,1 1 | 6,7 | 5,8 |
| 16 (Vergl.) | - | 75 | 12,5 | 12,5 | 0,5 | - | - | - | - | 0,5 | 10,9 | 6,3 | 4,5 |
| 17 (Vergl.) | - | 75 | 12,5 | 12,5 | - | | | | 1 | - | 11,9 | 7,1 | 5,3 |
| 18 (Vergl.) | - | 75 | 12,5 | 12,5 | 0,5 | - | - | - | - | - | 11,5 | 6,9 | 4,1 |
| n.b. = nicht bestimmt | | | | | | | | | | | | | |

## Patentansprüche

**1.** Zusammensetzungen enthaltend

A) 5 bis 95 Gew.-% eines oder mehrerer thermoplastischer Homo-, Co oder Terpolymerisate von Styrol, α-Methylstyrol, kernsubstituiertem Styrol, Methylmethacrylat, Acrylnitril, Methacrylnitril, Maleinsäureanhydrid, N-substituiertem Maleinimid oder Mischungen daraus
B) 5 bis 95 Gew.-% eines oder mehrerer Pfropfpolymerisate von

B.1) 5 bis 90 Gew.-Teilen Styrol, α-Methylstyrol, kernsubstituiertem Styrol, Methylmethacrylat, Acrylnitril, Methacrylnitril, Maleinsäureanhydrid, N-substituiertern Maleinimid oder Mischungen daraus auf
B.2) 95 bis 10 Gew.-Teilen mindestens eines Kautschuks mit einer Glastemperatur ≤ 10°C
und

C) 0,05 bis 10 Gew.- Teile (pro 100 Gew.-Teile A + B)) bestehend aus einer Kombination bestehend aus einer Komponente (II) und mindestens 2 weiteren Komponenten, ausgewählt aus Verbindungen I), III) und IV), wobei
I) eine Verbindung mit mindestens einer Struktureinheit

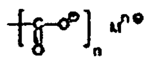

M = Metall und
n = Wertigkeit des Metalls M
darstellt,

II) eine Verbindung mit mindestens einer Struktureinheit

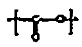

und mindestens einer Struktureinheit

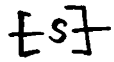

darstellt,
III) eine Verbindung mit mindestens einer Struktureinheit

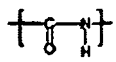

darstellt, ausgewählt aus Ethylendiaminbisstearylamid, Erucasäureamid, Ölsäureamid, Stearinsäureamid, Behensäureamid und Montansäureamid und
IV) eine Verbindung mit Struktureinheiten darstellt, die verschieden von in den Verbindungen (1) bis (111) enthaltenen angegebenen Struktureinheiten bzw. Kombination von Struktureinheiten sind, die ausgewählt wird aus Paraffinölen, Kohlenwasserstoffwachsen, Polystyrol hergestellt unter Verwendung von $C_8$-$C_{18}$-Alkylmercaptanen als Molekulargewichtsregler mit mittleren Molekulargewichten ($M_w$) zwischen 2000 und 15000, Styrol/Acrylnitril-Copolymerisat hergestellt unter Verwendung von $C_8$-$C_{18}$-Alkylmercaptanen als Molekulargewichtsregler mit mittleren Molekulargewichten ($M_w$) zwischen 2000 und 15000, α-Methylstyrol/Acrylnitril-Copolymerisat hergestellt unter Verwendung von $C_8$-$C_{18}$-Alkylmercaptanen als Molekulargewichtsregler mit mittleren Molekulargewichten ($M_w$) zwischen 2000 und 15000, Polymethylmethacrylat hergestellt unter Verwendung von $C_8$-$C_{18}$-Alkylmercaptanen als Molekulargewichtsregler mit mittleren Molekulargewichten ($M_w$) zwischen 2000 und 15000, $C_6$-$C_{32}$ Alkanolen, $C_6$-$C_{32}$-Alkenolen.

**2.** Zusammensetzungen gemäß Anspruch 1, wobei jede der Verbindungen (1) bis (IV) mindestens einen endständigen $C_6$-$C_{32}$-Kohlenwasserstoff-Rest enthält.

**3.** Zusammensetzungen gemäß Anspruch 1 oder 2, wobei Verbindung (I) ausgewählt ist aus Magnesiumstearat, Calciumstearat, Zinkstearat, Magnesiummontanat, Calciummontanat, Zinkmontanat, Magnesiumbehenat, Calciumbehenat, Zinkbehenat, Magnesiumoleat, Calciumoleat, Zinkoleat.

**4.** Zusammensetzungen gemäß Anspruch 1 oder 2, wobei Verbindung (II) ausgewählt ist aus Estern der β-Thiodipropionsäure mit ein- oder mehrwertigen Alkoholen.

**5.** Zusammensetzungen gemäß einem oder mehreren der vorhergehenden Ansprüche, wobei die Verbindungen (I) bis (IV) jeweils ausgewählt sind aus:

Verbindung (I): Magnesiumstearat, Calciumstearat,
Verbindung (II): Laurylester der β-Thio-dipropionsäure, Stearylester der β-Thio-dipropionsäure,
Verbindung (III): Ethylendiaminbisstearylamid, Erucasäureamid,
Verbindung (IV): Paraffinöle, niedermolekulare Styrol/Acrylnitril Copolymerisate, α-Methylstyrol/Acrylnitril-Copolymerisate.

**6.** Zusammensetzungen gemäß einem oder mehreren der vorhergehenden Ansprüche, wobei die Mengenverhältnisse von Komponente (II) und mindestens 2 Komponenten, ausgewählt aus (I), (III) und (IV), folgende Beziehung haben.

$$(I) \leq (IV) \leq (II) \leq (III)$$

oder

$$(I) \leq (IV) \leq (III) \leq (II)$$

**7.** Zusammensetzungen gemäß einem oder mehreren der vorhergehenden Ansprüche enthaltend 0,5 bis 5 Gew.-Teile C) pro 100 Gew.-Teilen A+B.

**8.** Zusammensetzungen gemäß einem oder mehreren der vorhergehenden Ansprüche, wobei Komponente B.2 ausgewählt ist aus Dien- oder Alkylacrylat kautschuken oder EPDM-Kautschuken.

**9.** Zusammensetzungen gemäß einem oder mehreren der vorhergehenden Ansprüche, enthaltend Verarbeitungshilfsmittel, Stabilisatoren, Pigmente, Antistatika und/oder Füllstoffe.

**10.** Verwendung der Zusammensetzungen nach einem oder mehreren der vorhergehenden Ansprüche zur Herstellung von Formkörpern.

**11.** Formkörper, erhältlich aus Zusammensetzungen nach einem oder mehreren der vorhergehenden Ansprüche.

**12.** Additivkombination bestehend aus Komponente (II) und mindestens 2 Komponenten, ausgewählt aus Verbindungen I), III) und IV), wobei I) eine Verbindung mit mindestens einer Struktureinheit

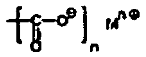

M = Metall und
n = Wertigkeit des Metalls M

darstellt,

II) eine Verbindung mit mindestens einer Struktureinheit

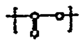

und mindestens einer Struktureinheit

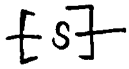

darstellt,
III) eine Verbindung mit mindestens einer Struktureinheit

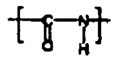

darstellt, ausgewählt aus Ethylendiaiminbisstearylamid, Erucasäureamid, Ölsäureamid, Stearinsäureamid, Behensäureamid, und Montansäureamid, und
IV) eine Verbindung mit Struktureinheiten darstellt, die verschieden von in den Verbindungen (I) bis (III) enthaltenen angegebenen Struktureinheiten bzw. Kombination von Struktureinheiten sind, und die ausgewählt wird aus Paraffinölen, Kohlenwasserstoffwachsen, Polystyrol hergestellt unter Verwendung von $C_8$-$C_{18}$-Alkylmercaptanen als Molekulargewichtsregler mit mittleren Molekulargewichten ($M_w$) zwischen 2000 und 15000, Styrol/Acrylnitril-Copolymerisat hergestellt unter Verwendung von $C_8$-$C_{18}$-Alkylmercaptanen als Molekulargewichtsregler mit mittleren Molekulargewichten ($M_w$) zwischen 2000 und 15000, $\alpha$-Methylstyrol/Acrylnitril-Copolymerisat hergestellt unter Verwendung von $C_8$-$C_{18}$-Alkylmercaptanen als Molekulargewichtsregler mit mittleren Molekulargewichten ($M_w$) zwischen 2000 und 15000, Polymethylmethacrylat hergestellt unter Verwendung von $C_8$-$C_{18}$-Alkylmercaptanen als Molekulargewichtsregler mit mittleren Molekulargewichten ($M_w$) zwischen 2000 und 15000, $C_6$-$C_{32}$ Alkanolen, $C_6$-$C_{32}$-Alkenolen.

## Claims

**1.** Compositions containing

A) 5 to 95 wt % of one or more thermoplastic homo-, co- or terpolymers of styrene, $\alpha$-methyl styrene, ring-substituted styrene, methyl methacrylate, acrylonitrile, methacrylonitrile, maleic anhydride, N-substituted maleinimide or mixtures thereof,
B) 5 to 95 wt % of one or more graft polymers of

B.1) 5 to 90 parts by wt of styrene, $\alpha$-methyl styrene, ring-substituted styrene, methyl methacrylate, acrylonitrile, methacrylonitrile, maleic anhydride, N-substituted maleinimide or mixtures thereof,

B.2) 95 to 10 parts by wt of at least one rubber with a glass transition temperature of ≤ 10°C and

C) 0.05 to 10 parts by wt (per 100 parts by wt of A) + B), consisting of a combination consisting of one component II) and at least two further components selected from compounds I), III) and IV), where

I) represents a compound having at least one structural unit

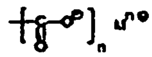

M = metal and
n = valency of the metal M

II) represents a compound having at least one structural unit

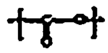

and at least one structural unit

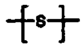
,

III) represents a compound having at least one structural unit

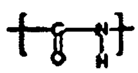
.

selected from ethylenediamine tristearylamide, erucic acid amide, oleic acid amide, stearic acid amide, behenic acid amide and montanic acid amide, and
IV) represents a compound having structural units that are different from the specified structural units or combination of structural units contained in compounds I) to III), which is selected from: paraffin oils, hydrocarbon waxes, polystyrene produced with the use of $C_8$-$C_{18}$ alkyl mercaptans as molecular weight regulators with mean molecular weights ($\overline{M}_w$) of between 2 000 and 15 000, styrene/acrylonitrile copolymer produced with the use of $C_8$-$C_{18}$ alkyl mercaptans as molecular weight regulators with mean molecular weights ($\overline{M}_w$) of between 2 000 and 15 000, $\alpha$-methyl styrene/acrylonitrile copolymer produced with the use of $C_8$-$C_{18}$ alkyl mercaptans as molecular weight regulators with mean molecular weights ($\overline{M}_w$) of between 2 000 and 15 000, polymethyl methacrylate produced with the use of $C_8$-$C_{18}$ alkyl mercaptans as molecular weight regulators with mean molecular weights ($\overline{M}_w$) of between 2 000 and 15 000, $C_6$-$C_{32}$ alkanols, $C_6$-$C_{32}$ alkenols.

**2.** Compositions according to claim 1, where each of compounds I) to IV) contains at least one terminal $C_6$-$C_{32}$ hydrocarbon group.

**3.** Compositions according to claim 1 or 2, where compound I) is selected from magnesium stearate, calcium stearate, zinc stearate, magnesium montanate, calcium montanate, zinc montanate, magnesium behanate, calcium behenate, zinc behenate, magnesium oleate, calcium oleate, zinc oleate.

**4.** Compositions according to claim 1 or 2, where compound II) is selected from esters of β-thio-dipropionic acid with one or more polyvalent alcohols.

**5.** Compositions according to one or more of the preceding claims, where compounds I) to IV) are selected respectively from:

Compound I): Magnesium stearate, calcium stearate
Compound II): Lauryl esters of β-thio-dipropionic acid Stearyl esters of β-thio-dipropionic acid
Compound III): Ethylenediamine bisstearylamide, erucic acid amide
Compound IV): Paraffin oils, low-molecular weight styrene/acrylonitrile copolymers, α-methyl styrene/acrylonitrile copolymers.

**6.** Compositions according to one or more of the preceding claims, where the quantitative ratios of component II) and at least two components selected from I), III) and IV) have the following relation:

$$(I) \leq (IV) \leq (II) \leq (III)$$

or

$$(I) \leq (IV) \leq (III) \leq (II)$$

**7.** Compositions according to one or more of the preceding claims, containing 0.5 to 5 parts by wt of C) per 100 parts by wt of A)+B).

**8.** Composition according to one or more of the preceding claims, where component B.2 is selected from diene or alkyl acrylate rubbers or EPDM rubbers.

**9.** Compositions according to one or more of the preceding claims, containing processing aids, stabilizers, pigments, antistatic agents and/or fillers.

**10.** Use of the compositions according to one or more of the preceding claims for the production of mouldings.

**11.** Mouldings obtainable from compositions according to one or more of the preceding claims.

**12.** Additive combination consisting of component II) and at least two components selected from compounds I), III) and IV), where

I) represents a compound having at least one structural unit

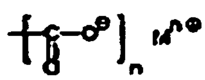

M = metal and
N = valency of the metal M

II) represents a compound having at least one structural unit

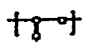

and at least one structural unit

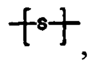

III) represents a compound having at least one structural unit

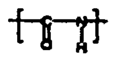

selected from ethylenediamine tristearylamide, erucic acid amide, oleic acid amide, stearic acid amide, behenic acid amide and montanic acid amide, and

IV) represents a compound having structural units that are different from the specified structural units or combination of structural units contained in compounds I) to III), which is selected from: paraffin oils, hydrocarbon waxes, polystyrene produced with the use of $C_8$-$C_{18}$ alkyl mercaptans as molecular weight regulators with mean molecular weights ( $\overline{M}_w$) of between 2 000 and 15 000, styrene/acrylonitrile copolymer produced with the use of $C_8$-$C_{18}$ alkyl mercaptans as molecular weight regulators with mean molecular weights ( $\overline{M}_w$) of between 2 000 and 15 000, α-methyl styrene/acrylonitrile copolymer produced with the use of $C_8$-$C_{18}$ alkyl mercaptans as molecular weight regulators with mean molecular weights ( $\overline{M}_w$) of between 2 000 and 15 000, polymethyl methacrylate produced with the use of $C_8$-$C_{18}$ alkyl mercaptans as molecular weight regulators with mean molecular weights ( $\overline{M}_w$) of between 2 000 and 15 000, $C_6$-$C_{32}$ alkanols, $C_6$-$C_{32}$ alkenols.

**Revendications**

**1.** Composition contenant

A) 5 à 95 % en poids d'un ou de plusieurs homo-, co- ou terpolymères thermoplastiques de styrène, d'α-méthylstyrène, de styrène substitué sur le noyau, de méthacrylate de méthyle, d'acrylonitrile, de méthacrylonitrile, d'anhydride maléique, de maléinimide N-substitué ou d'un de leurs mélanges ,

B) 5 à 95 % en poids d'un ou de plusieurs polymères greffés de

B.1) 5 à 90 parts pondérales de styrène, d'α-méthylstyrène, de styrène substitué sur le noyau, de méthacrylate de méthyle, d'acrylonitrile, de méthacrylonitrile, d'anhydride maléique, de maléinimide N-substitué ou d'un de leurs mélanges,

B.2) 95 à 10 parts pondérales d'au moins un caoutchouc avec une température de transition vitreuse ≤ 10°C

et

C) 0,05 à 10 parts pondérales (par 100 parts pondérales de A + B) d'une combinaison consistant en un composant (II) et au moins 2 autres composants, choisis parmi des composés I), III) et IV), sachant que I) représente un composé avec au moins une unité de structure

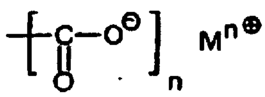

M = métal et

n = valence du métal M,

II) représente un composé avec au moins une unité de structure

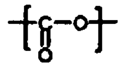

et au moins une unité de structure

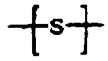

III) représente un composé avec au moins une unité de structure

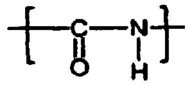

choisi parmi l'éthylène diamine-bis-stéarylamide, l'amide de l'acide érucique, l'amide de l'acide oléique, l'amide de l'acide stéarique, l'amide de l'acide béhénique et l'amide de l'acide octacosanoïque, et
IV) représente un composé avec des unités de structure qui sont différentes des unités de structure, respectivement des combinaisons d'unités de structure spécifiées contenues dans les composés (I) à (III), et qui est choisi parmi les huiles de paraffine, les cires d'hydrocarbures, des polystyrènes préparés avec des poids moléculaires moyens (Mm) compris entre 2 000 et 15 000 moyennant l'utilisation d'alkylmercaptans en C8 à C18 comme régulateurs de poids moléculaires, des copolymères styrène/acrylonitrile préparés avec des poids moléculaires moyens (Mm) compris entre 2 000 et 15 000 moyennant l'utilisation d'alkylmercaptans en C8 à C18 comme régulateurs de poids moléculaires, des copolymères d'α-méthylstyrène/acrylonitrile préparés avec des poids moléculaires moyens (Mm) compris entre 2 000 et 15 000 moyennant l'utilisation d'alkylmercaptans en C8 à C18 comme régulateurs de poids moléculaires, des polyméthacrylates de méthyle préparés avec des poids moléculaires moyens (Mm) compris entre 2 000 et 15 000 moyennant l'utilisation d'alkylmercaptans en C8 à C18 comme régulateurs de poids moléculaires, des alcanols en C6 à C32, des alcénols en C6 à C32.

**2.** Compositions selon la revendication 1, dans lesquelles chacun des composés (I) à (IV) contient au moins un radical hydrocarbure en $C_6$ à $C_{32}$ en position d'extrémité.

**3.** Compositions selon la revendication 1 ou 2, dans lesquelles le composé (I) est choisi parmi le stéarate de magnésium, le stéarate de calcium, le stéarate de zinc, l'octacosanoate de magnésium, l'octacosanoate de calcium, l'octacosanoate de zinc, le béhénate de magnésium, le béhénate de calcium, le béhénate de zinc, l'oléate de magnésium, l'oléate de calcium, l'oléate de zinc.

**4.** Compositions selon la revendication 1 ou 2, dans lesquelles le composé (II) est choisi parmi les esters de l'acide β-thio-dipropionique avec des alcools mono- ou polyvalents.

**5.** Compositions selon l'une quelconque ou plusieurs des revendications précédentes, dans lesquelles les composés (I) à (IV) sont choisis respectivement :

pour le composé (I) : parmi le stéarate de magnésium, le stéarate de calcium,
pour le composé (II) : parmi l'ester laurique de l'acide β-thio-dipropionique, l'ester stéarique de l'acide β-thio-dipropionique,
pour le composé (III) : parmi l'éthylène diamine-bis-stéarylamide, l'amide de l'acide érucique,
pour le composé (IV) : parmi les huiles de paraffine, les copolymères styrène/acrylonitrile de bas poids moléculaire, les copolymères α-méthylstyrène/acrylonitrile.

**6.** Compositions selon l'une quelconque ou plusieurs des revendications précédentes, dans lesquelles les proportions quantitatives du composant (II) et d'au moins 2 composants, choisis parmi (I), (III) et (IV), ont la relation suivante.

$$(I) \leq (IV) \leq (II) \leq (III)$$

ou

$$(I) \leq (IV) \leq (III) \leq (II)$$

**7.** Compositions selon l'une quelconque ou plusieurs des revendications précédentes contenant 0,5 à 5 parts pondérales de C) par 100 parts pondérales de A+B.

**8.** Compositions selon l'une quelconque ou plusieurs des revendications précédentes, dans lesquelles le composant B.2 est choisi parmi des caoutchoucs diéniques ou alkylacryliques ou des caoutchoucs EPDM.

**9.** Compositions selon l'une quelconque ou plusieurs des revendications précédentes, contenant des auxiliaires de transformation, des stabilisateurs, des pigments, des antistatiques et/ou des charges.

**10.** Utilisation des compositions selon l'une quelconque ou plusieurs des revendications précédentes pour la fabrication de corps moulés.

**11.** Corps moulés pouvant être obtenus à partir de compositions selon l'une quelconque ou plusieurs des revendications précédentes.

**12.** Combinaison d'addition consistant en le composant (II) et au moins 2 composants, choisis parmi les composés I), III) et IV), dans lesquelles I) représente un composé avec au moins une unité de structure

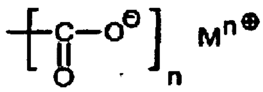

M = métal et
n = valence du métal M,
II) représente un composé avec au moins une unité de structure

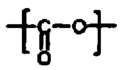

et au moins une unité de structure

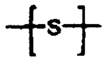

III) représente un composé avec au moins une unité de structure

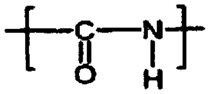

choisi parmi l'éthylène diamine-bis-stéarylamide, l'amide de l'acide érucique, l'amide de l'acide oléique, l'amide de l'acide stéarique, l'amide de l'acide béhénique et l'amide de l'acide octacosanoïque, et
IV) représente un composé avec des unités de structure qui sont différentes des unités de structure, respectivement des combinaisons d'unités de structure spécifiées contenues dans les composés (I) à (III), et qui est choisi parmi les huiles de paraffine, les cires d'hydrocarbure, des polystyrènes préparés avec des poids moléculaires moyens (Mm) compris entre 2 000 et 15 000 moyennant l'utilisation d'alkylmercaptans en $C_8$ à $C_{18}$ comme régulateurs de poids moléculaires, des copolymères styrène/acrylonitrile préparés avec des poids moléculaires moyens (Mm) compris entre 2 000 et 15 000 moyennant l'utilisation d'alkylmercaptans en $C_8$ à $C_{18}$ comme régulateurs de poids moléculaires, des copolymères d'$\alpha$-méthylstyrène/acrylonitrile préparés avec des poids moléculaires moyens (Mm) compris entre 2 000 et 15 000 moyennant l'utilisation d'alkylmercaptans en $C_8$ à $C_{18}$ comme régulateurs de poids moléculaires, des polyméthacrylates de méthyle préparés avec des poids moléculaires moyens (Mm) compris entre 2 000 et 15 000 moyennant l'utilisation d'alkylmercaptans en $C_8$ à $C_{18}$ comme régulateurs de poids moléculaires, des alcanols en $C_6$ à $C_{32}$, des alcénols en $C_6$ à $C_{32}$.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 6521 A
- EP 412370 A
- EP 412371 A
- WO 0077092 A
- US 4957968 A
- EP 64020 A


### In der Beschreibung aufgeführte Nicht-Patentliteratur


- **W. SCHOLTAN et al.** *Kolloid-Z. u.Z. Polymere,* 1972, vol. 250, 782-796